# EUROPEAN PATENT APPLICATION

(11) **EP 0 644 688 A1**
(43) Date of publication of application: **22.03.1995**
(21) Application number: 94402037.9
(22) Date of filing: 13.09.1994
(51) Int. Cl.: H04N 5/232, G03B 19/12

(54) **Rear focus type zoom lens including optical view finder integral therewith**

(30) Priority: 17.09.1993 KR 9318892
(71) Applicant: LG ELECTRONICS INC., Seoul (KR)
(72) Inventor: Kwon, Sung Tae, Songpa-Ku, Seoul (KR); Lee, Man Hyung, Nowon-Ku, Seoul (KR)
(74) Representative: Fort, Jacques

(57) **Abstract**

A rear focus type zoom lens including four sections respectively constituted by an objective lens (51), a magnification varying lens (52), a transmission lens (54) and an image focusing lens (55) arranged in this order such that the objective lens is disposed at the frontmost position, the zoom lens further including a beam splitter (56) disposed between a rearmost lens component of the image focusing lens and an image focusing surface (57) and adapted to separate a part of light incident thereon so that an optical view finder system is integral with an image pickup system. This construction makes it possible to prevent a parallax occurring in a case including a separate view finder. Since the overall construction of the zoom lens is common to the view finder, no separate objective lens is required in the view finder system. The zoom lens enables compactness and lightness of the optical view finder system because it is of the rear focus type, as compared to those of the existing front focus type. In particular, the rear focus type zoom lens makes it possible to view a clear image even at a bright place because light adjusted in amount by the iris (53) is incident on the viewer's eye.

## Description

### BACKGROUND OF THE INVENTION

### Field of the Invention

The present invention relates to a rear focus type zoom lens, and more particularly to a rear focus type zoom lens including an optical view finder of a through the lens (TTL) system, which the optical view finder is integral with the zoom lens.

### Description of the Prior Art

Conventional optical view finders are classified, in terms of constitution, into those of a view finder system constructed separately from an image pickup system and those of a view finder system integral with the image pickup system.

Such optical view finder systems are partially disclosed in U.S. Patent No. 4,544, 250 "Optical System for Camera with a View Finder" and the handbook "Camera Technique" issued by Japanese Photograph Industrial Technique Company, Limited.

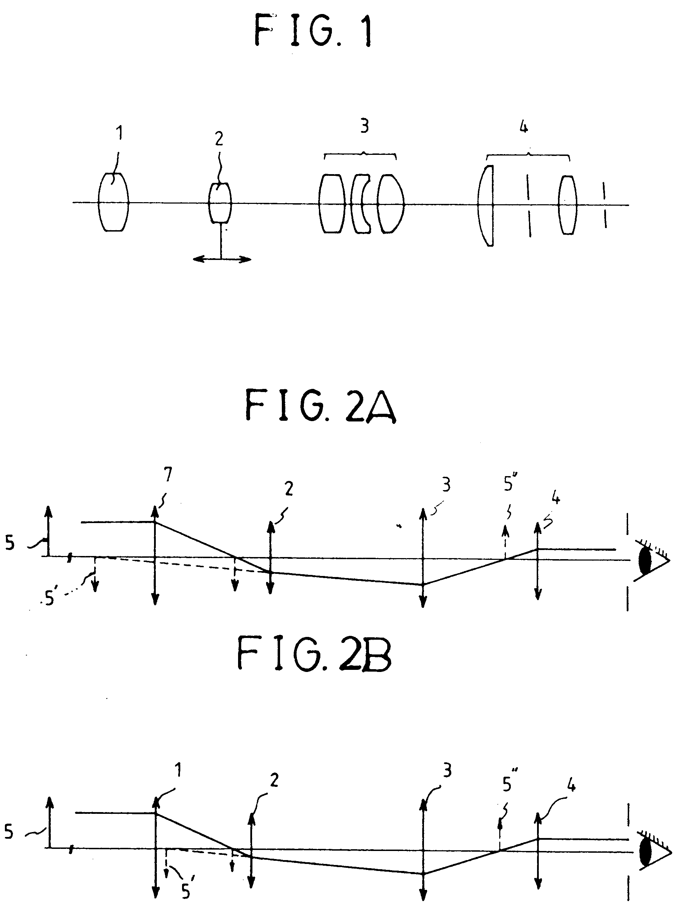

The optical view finder including the view finder system constructed separately from the image pickup system is of two types one being the optical real image type and the other being the optical virtual image type. FIG. 1 shows a construction of the optical real image type view finder, while FIGS. 2A and 2B show an functional effect of the optical real image type view finder, respectively.

As shown in FIG. 1, the optical real image type view finder includes an objective lens 1 disposed at the frontmost position on an optical axis of the view finder. The objective lens 1 is followed by a magnification varying lens 2 which is composed of lens elements having positive or negative refractive indexes to obtain a predetermined variable magnification. A transmission lens 3 composed of lens elements having positive or negative refractive indexes is disposed behind the magnification varying lens 2 and spaced a predetermined distance apart from the magnification varying lens 2. The transmission lens 3 serves to transmit an image from the magnification varying lens 2 incident thereon by its function. An eyepiece 4 is arranged behind the transmission lens 3 and composed of lens elements having positive refractive indexes.

As shown in FIG. 2A, the objective lens 1 refracts light indicative of an image of an object 5 positioned at an optional position so that the image of the object 5 may be transmitted to the interior of a barrel in which the constituting elements of the view finder are arranged. The image from the objective lens 5 is transmitted to the magnification varying lens 2 which, in turn, moves depending on a variation in the focus lens of the image pickup system, thereby producing an inversely-erected real image 5'. The inversely-erected image 5' obtained through the objective lens 1 and the magnification varying lens 2 is transmitted to the transmission lens 3 which, in turn, inverts the transmitted image 5' vertically or laterally to produce a normally-erected image 5'' having the same form as the object 5 and enlarges or reduces the produced image 5'' to an appropriate size to be observed to the naked eye. The image 5'' produced by the transmission lens 3 is then transmitted to the eyepiece 4. The eyepiece 4 serving as a magnifier enlarges the received image again. The enlarged image from the eyepiece 4 is transmitted to the eye of a viewer and then focused on its retina.

FIG. 2B shows a condition when the magnification varying lens 2 carrying out a variation in image magnification is moved toward the objective lens 1. In this case, functions of the constituting elements of the view finder are the same as those in the case shown in FIG. 2A.

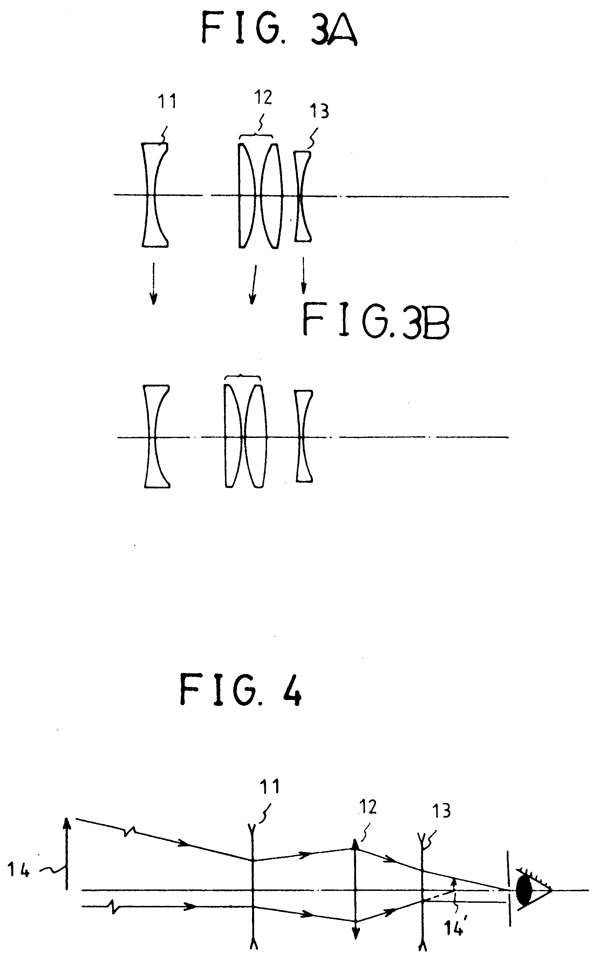

On the other hand, FIGS. 3A and 3B show a construction of the optical virtual image type view finder, respectively, while FIG. 4 show an functional effect of the optical virtual image type view finder.

As shown in FIG. 3A, the optical virtual image type view finder includes an objective lens 11 disposed at the frontmost position on an optical axis of the view finder. The objective lens 11 is followed by a magnification varying lens 12 which is composed of lens elements having positive or negative refractive indexes to obtain a predetermined variable magnification. The magnification varying lens 12 is spaced a predetermined distance apart from the objective lens 11 along the optical axis. An eyepiece 13 is arranged behind the magnification varying lens 12 such that it is spaced a predetermined distance apart from the magnification varying lens 12. The eyepiece 13 is disposed at the rearmost position on the optical axis.

FIG. 3B shows a condition when the magnification varying lens 12 carrying out a variation in image magnification is moved toward the objective lens 11. In this case, functions of the constituting elements of the view finder are the same as those in the case shown in FIG. 3A.

Now, operation of the conventional optical virtual image type view finder having the above-mentioned arrangement will be described, in conjunction with FIG. 4.

As shown in FIG. 4, the objective lens 11 refracts light indicative of an image of an optional object 14 so that the image of the object 14 may be transmitted to the interior of a barrel in which the constituting elements of the view finder are arranged. The image from the objective lens 11 is transmitted to the magnification varying lens 12 operatively connected with the image pickup system, thereby producing a normally-erected virtual image 14'. Since the image obtained through the objective lens 11 and the magnification varying lens 12 is the normally-erected virtual image, any transmission system for an image correction is unnecessary. Such a transmission system is required in the optical real image type view finder. The normally-erected virtual image is directly transmitted to the eyepiece 13 which, in turn, enlarges the received image The enlarged image 14' from the eyepiece 13 is transmitted to the eye of a viewer and then focused on its retina.

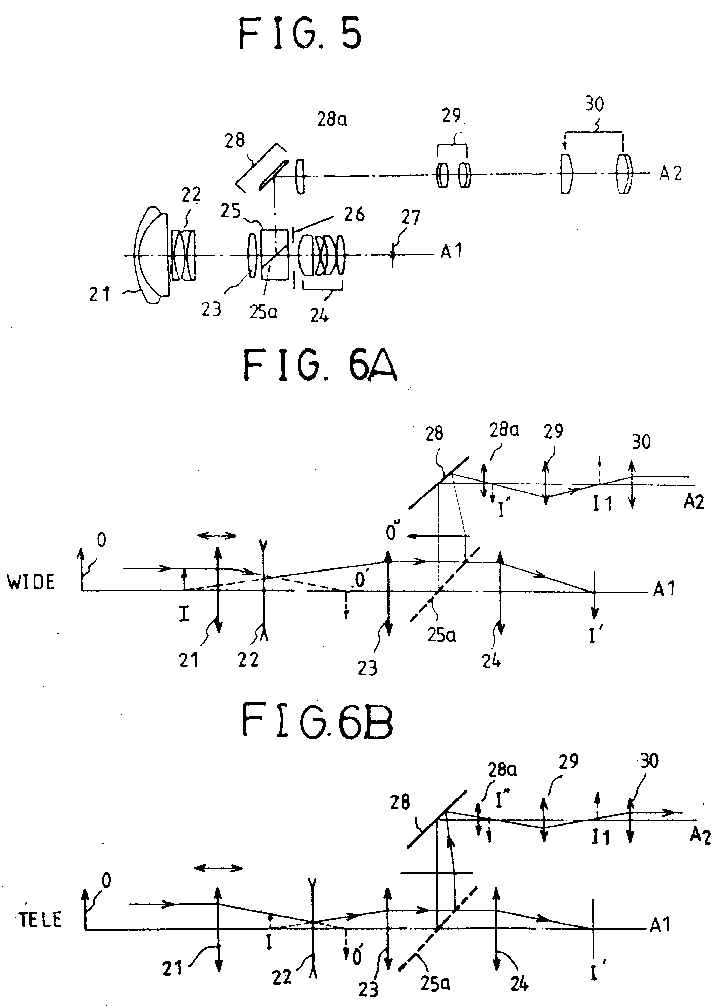

On the other hand, FIG. 5 shows the optical view finder of the TTL system integral with the image pickup system to have a construction including a magnification varying unit in common with the image pickup system. As shown in FIG. 5, an objective lens 21 constituting a part of the image pickup system is disposed at the frontmost position on an optical axis of the view finder. The objective lens 21 is composed of lens elements having positive or negative refractive indexes and has a positive refractive index totally. The objective lens 21 is followed by a magnification varying lens 22 which is composed of lens elements having positive or negative refractive indexes to obtain a predetermined variable magnification. The magnification varying lens 22 has a negative refractive index totally. Behind the magnification varying lens 22, a compensation lens 23 is disposed such that it spaces a predetermined distance apart from the magnification varying lens 22. The compensation lens 23 serves to carry out an image compensation. An image focusing lens 24 is arranged behind the compensation lens 23. The image focusing lens 24 is composed of lens elements having positive or negative refractive indexes to obtain a negative refractive index totally. Between the compensation lens 23 and the image focusing lens 24, a beam splitter 25 having a hexahedron shape is disposed. The beam splitter 25 is provided with a reflection surface 25a adapted to reflect incident light at a predetermined angle. An iris 26 is also disposed between the image focusing lens 24 and the beam splitter 25 so as to adjust brightness of an image. The incident light emerging from the compensation lens 23 and then being reflected by the reflection surface 25a of the beam splitter 25 is splitted into lights respectively travelling along two optical paths. One of the splitted optical paths extends to the view finder, while the other extends to the image focusing lens 24. Light emerging from the image focusing lens 24 is transmitted to a light receiving element 27 which serves to focus an image thereon.

On the other hand, parallel light incident on the view finder system is transmitted to an eyepiece 30 via a total reflection mirror 28, a field lens 28a and a transmission lens 29. The eyepiece 30 enlarges an image received thereto, thereby enabling the image to be observed.

FIGS. 6A and 6B explain functional effects of the conventional optical view finder of the TTL system having the above-mentioned arrangement, respectively. FIG. 6A shows a wide mode, while FIG. 6B shows a tele mode.

Operation of the optical view finder will now be described, in conjunction with FIGS. 6A and 6B. As shown in FIG. 6A, the objective lens 21 carries out a focusing for an object O positioned at an optional position so that an image of the object O may be focused on a specific position in a barrel in which the constituting elements of the view finder are arranged. The image from the objective lens O is transmitted to the magnification varying lens 22 which moves to produce an image I at a variable position. The compensation lens 23 serves to carry out an image compensation for the variation in image position so that parallel light may be always transmitted to the image focusing system. Before the parallel light is incident on the image focusing system, the reflection surface 25a provided in the beam splitter 25 disposed in front of the iris 26 splits incident light into lights respectively travelling along two separate optical paths. The splitted lights still travel in the form of parallel light. The parallel light incident on the image focusing system is focused on a light receiving surface of the light receiving element 27 by the image focusing lens 24, thereby producing an image I'. On the other hand, the parallel light incident on the view finder is focused on a predetermined position in the view finder barrel by the image focusing lens 28, thereby producing an image I''. The image I'' is transmitted to the transmission lens 29 which corrects the received image I'' in size and form, thereby producing an image I1. The image I1 is then transmitted to the eyepiece 30 which, in turn, enlarges the received image I1 to be observed to the eye of a viewer.

FIG. 6B shows a condition when the magnification varying lens 22 is moved slightly toward the objective lens 21. In this case, functions of the constituting elements of the view finder are the same as those in the case shown in FIG. 6A.

In both the case including the view finder system separately from the image pickup system and the case including the view finder integral with the image pickup system, parallax of incident image occurs. To solve such a parallax of incident image, a parallax correction mechanism such as the compensation lens should be used, thereby resulting in a complexity in construction. There is also a difference between an actually photographed image and an image observed to the naked eye through the view finder. The view finder system is also difficult to cope with the image pickup system having a high zoom ratio.

In an optical view finder of the TTL system which is integral with the existing front focus type zoom lens, its object lens should be arranged separately from the image pickup system because parallel light is incident thereon. This results in a complexity in the construction of optical system.

### SUMMARY OF THE INVENTION

Therefore, an object of the invention is to provide a rear focus type zoom lens including an optical view finder of the TTL system integral therewith, capable of eliminating the above-mentioned problems encountered in the prior art.

In accordance with the present invention, this object can be accomplished by providing a rear focus type zoom lens comprising four sections respectively constituted by an objective lens, a magnification varying lens, a transmission lens and an image focusing lens arranged in this order such that the objective lens is disposed at the frontmost position, the zoom lens further comprising: a beam splitter disposed between a rearmost lens component of the image focusing lens and an image focusing surface and adapted to separate a part of light incident thereon, whereby an optical view finder is integral with the zoom lens.

### BRIEF DESCRIPTION OF THE DRAWINGS

Other objects and aspects of the invention will become apparent from the following description of embodiments with reference to the accompanying drawings in which:
FIG. 1 is a schematic view of a conventional view finder of the optical real image type;
FIGS. 2A and 2B are schematic views respectively explaining operations of the view finder shown in FIG. 1;
FIGS. 3A and 3B are schematic views of a conventional view finder of the optical virtual image type, respectively;
FIG. 4 is a schematic view explaining operation of the view finder shown in FIGS. 3A and 3B;
FIG. 5 is a schematic view of a conventional view finder of the TTL system;
FIGS. 6A and 6B are schematic views respectively explaining operations of the view finder shown in FIG. 5;
FIGS. 7A and 7B are schematic views respectively illustrating a rear focus type zoom lens in accordance with an embodiment of the present invention, respectively, wherein FIG. 7A shows a wide mode of the zoom lens, while FIG. 7B shows a tele mode of the zoom lens;
FIGS. 8A and 8B are schematic views respectively explaining operations of the optical system shown in FIG. 5 in accordance with the present invention, wherein FIG. 8A shows a wide mode of the zoom lens, while FIG. 8B shows a tele mode of the zoom lens; and
FIG. 9 is a schematic view of a rear focus type zoom lens in accordance with another embodiment of the present invention.

### DETAILED DESCRIPTION OF THE PREFERRED EMBODIMENTS

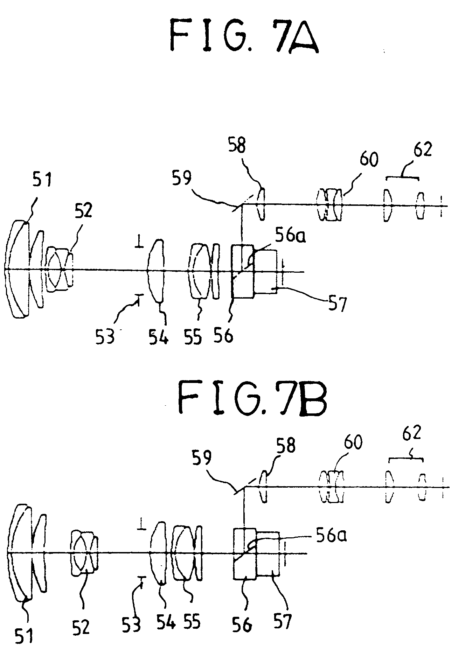

FIGS. 7A and 7B illustrate a rear focus type zoom lens including an optical view finder of the TTL system integral therewith in accordance with an embodiment of the present invention, respectively. FIG. 7A shows a wide mode of the zoom lens, while FIG. 7B shows a tele mode of the zoom lens. As shown in FIG. 7A and 7B, an objective lens 51 is disposed at the frontmost position on an optical axis A1. The objective lens 51 is composed of lens elements having positive or negative refractive indexes and has a positive refractive index totally. The objective lens 21 is followed by a magnification varying lens 52 which is composed of lens elements having positive or negative refractive indexes to obtain a predetermined variable magnification. The magnification varying lens 52 has a negative refractive index totally. The magnification varying lens 52 is spaced a predetermined distance apart from the objective lens 51 so that it moves to vary the focal length of the entire zoom lens system.

Behind the magnification varying lens 52 along the optical axis A1, an iris 53 is disposed which serves to adjust the amount of incident light to a predetermined level. A transmission lens 54 is arranged behind the iris 53. The transmission lens 54 serves to transmit an image emerging from the iris 53 to a final image focusing lens in a predetermined form. Behind the transmission lens 54, an image focusing lens 55 is disposed which is composed of lens elements having positive or negative refractive indexes to obtain a positive refractive index totally. Totally, the zoom lens system is constituted by four sections, namely, the objective lens section, the magnification varying lens section, the iris section and the image focusing lens section.

The zoom lens constituted by the four sections further includes a beam splitter 56 having a hexahedron shape. The beam splitter 56 is disposed between a final lens surface of the image focusing lens 56 and an image focusing surface 61 and provided with a reflection surface 56a adapted to reflect incident light along different two optical paths respectively guiding light of different brightness. One of the optical paths extends along the optical axis A1, while the other optical path extends in perpendicular to the optical axis A1.

The reflection surface 56a is provided with a coating exhibiting the same reflection factor and transmittivity for various wavelengths in an effective wavelength band of the image focusing section of the zoom lens system so as to obtain a good color rendering of an image focused on the final focus and an image transmitted to the viewer's eye. Where a prism beam splitter is used, a treatment is also required to partially form grooves at a surface of the prism in order to prevent occurrence of ghost and flare of images.

A light receiving element 57 is disposed behind the image focusing lens 55 along the optical axis A1. Where the light receiving element 57 is comprised of a charge coupled device (CCD), a low pass filter is also provided which is disposed behind the light receiving element 57. By the provision of the light receiving element 57, the zoom lens system functions as an image focusing system.

On the other hand, a total reflection mirror 59 is arranged on the optical path extending in perpendicular to the optical axis A1 and guiding light perpendicularly reflected by the beam splitter 56. The total reflection mirror 59 is disposed at the same angle as the reflection surface 56a of the beam splitter 56 so that it guides light reflected thereby in parallel to the optical axis A1. Behind the total reflection mirror 59, a field lens 58 having a function of converging diverged light is disposed. Behind the field lens 58, a transmission lens 60 is arranged on an optical axis of the field lens 58 extending in parallel to the optical axis A1. The transmission lens 60 serves to correct an image emerging from the field lens 58 vertically or laterally to produce a final image having the same vertical and lateral form as the object, correct optical performance, and enlarges or reduces the image to an appropriate size to be observed to the naked eye. An eyepiece 62 is disposed behind the transmission lens 60. The eyepiece 62 is spaced a predetermined distance apart from the transmission lens 60 and adapted to enlarge the image emerging from the transmission lens 60 to obtain an enlarge final image. Thus, an optical view finder system is constructed.

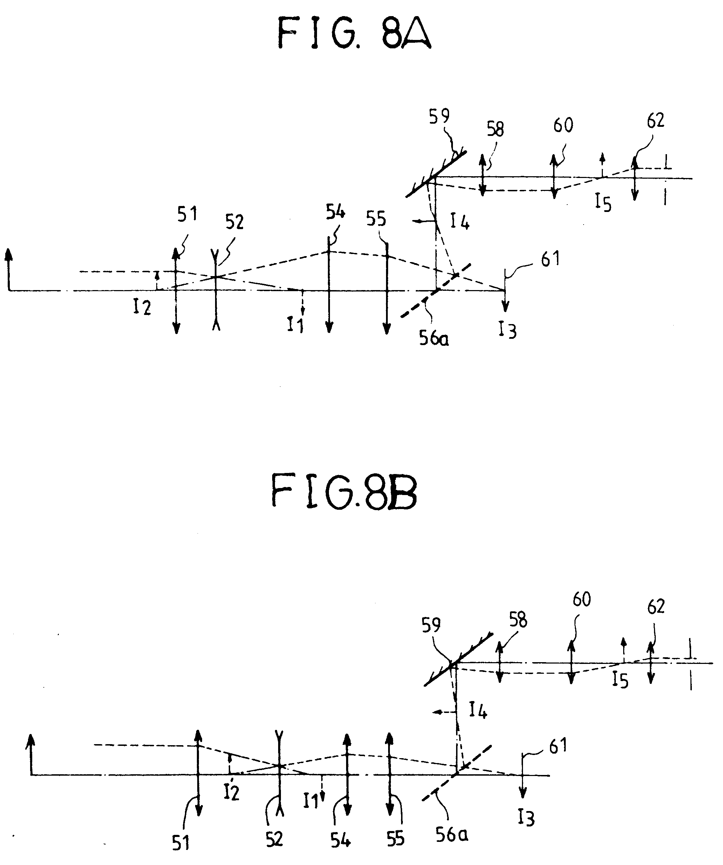

Operation of the rear focus type zoom lens including the optical view finder integral therewith will now be described, in conjunction with FIGS. 8A and 8B.

As shown in FIG. 8A, the objective lens 51 produces an inversely-erected real image of an object positioned at an optional position spaced an objective distance apart from the objective lens 51. The objective lens 51 is physically fixed such that it does not perform any focusing operation based on a variation in object distance. The magnification varying lens 52 receives the inversely-erected real image from the objective lens 51 and carries out a predetermined magnification variation for producing a normally-erected real image. The focal position and magnification of the produced image varies depending on the movement of the magnification varying lens 52 and the objective distance, as in images I2 and I2'. The variation in magnification by the magnification varying lens 52 upon focusing an image results in a variation in focal length. This is the principle of the magnification varying lens 52 performing the magnification variation. The variation in focal position is adjusted to focus an image on the image focusing surface by the movement of the image focusing lens 55 disposed in the rear section of zoom lens constituting the image focusing system. In view of such an operation, the zoom lens is called the rear focus type zoom lens system.

The image I2 produced by the magnification varying lens 52 is fed to the iris 53 which adjusts the width of light beams emitted from the image and incident thereon. By this adjustment, the image is adjusted in brightness. The adjusted image is then transmitted to the transmission lens 60 which, in turn, changes the received light into diverging light or converging light, depending on a requirement to correct the performance of emitted light. The changed light is then incident on the image focusing lens 55 which produces finally an inversely-erected real image 13 for the image 12 on the image focusing surface at which the light receiving element 57 is disposed.

The converging light incident on the image focusing surface 61 is splitted into two lights by the reflection surface 56a disposed in the interior of beam splitter 56. One of the splitted lights is fed to the image focusing lens 59 constituting a part of the view finder system, while the other light is fed to the image focusing surface of the image focusing system. The light incident on the view finder system is formed into an image I4 focused on the equidistant position as the image focusing surface 61 with respect to a cross point between the reflection surface and the optical axis. Light emitted from the image 14 is changed into converging light by the field lens 58 and then fed to the total reflection mirror 59. The light is reflected by the total reflection mirror 59 and then fed to the transmission lens 60. Upon receiving the reflected light, the transmission lens 60 produces a normally-erected real image 15 at a position near the eyepiece 61 disposed behind the transmission lens 60. The normally-erected real image is then enlarged in observation angle by the eyepiece 61 serving as a magnifier so that the viewer can view the enlarged image with the naked eye.

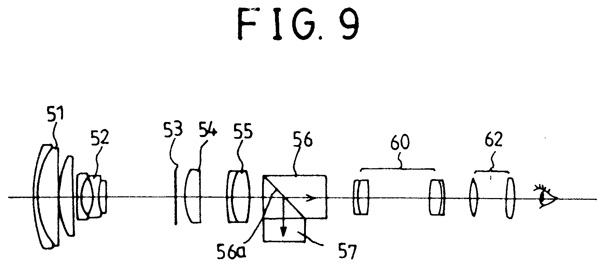

FIG. 9 illustrate a rear focus type zoom lens in accordance with another embodiment of the present invention. In FIG. 9, elements respectively corresponding to those in FIGS. 8A and 8B are denoted by the same reference numerals.

As shown in FIG. 9, the zoom lens includes an object lens 51, a magnification varying lens 22, an iris 53, a transmission lens 54 and an image focusing lens 55, all of which are arranged in a manner as described in conjunction with FIGS. 8A and 8B. Behind the last lens of the image focusing lens 55, a beam splitter 56 is disposed. The beam splitter 56 is provided with a reflection surface 56a adapted to not only reflect incident light at a predetermined angle of, for example, 90°, but also transmit the incident light therethrough such that the light travels along different two optical paths. In accordance with this embodiment, a light receiving element 57 is disposed on the optical path extending in perpendicular to the original optical axis, so as to focus an image. On the other hand, a transmission lens 60 composed of lens components having positive or negative refractive index and an eyepiece 62 are arranged on the optical path extending in parallel to the original optical axis so that the viewer can view an image with the naked eye.

By the above-mentioned arrangement, the zoom lens requires no separate space for the view finder. Furthermore, the overall construction of the zoom lens is simplified.

Now, effects of the rear focus type zoom lens including the optical view finder integral therewith in accordance with the present invention will be described.

In accordance with the present invention, the transmission lens and the image focusing lens provided in the zoom lens system to constitute the image focusing system are in common with the view finder system. This is different from the conventional TTL system in which only the magnification varying section of zoom lens system constituted by the objective lens and the magnification varying lens is in common with the view finder system. Moreover, the system of the present invention is distinguished technically from the conventional system because where an automatic exposure system is realized using the zoom lens system of the present invention, an image observation in real time can be achieved through the light receiving element provided in the image focusing system and the view finder system.

The rear focus type zoom lens including the optical view finder integral therewith in accordance with the present invention requires no separate electric power for driving the view finder, as compared to electronic view finders. Accordingly, the rear focus type zoom lens is operable with a reduced consumption of electric power. Also, the rear focus type zoom lens does not require any separate color display device. As a result, it is possible to obtain color images of high resolution and enhance focusing power.

It is also possible to prevent a parallax occurring in the case including a separate view finder by the arrangement wherein the light receiving element holds an optical axis in common with the image focusing lens. Since there is no movable part in the view finder barrel, the rear focus type zoom lens is simple in construction, as compared to the case including the separate view finder system.

Furthermore, the zoom lens of the present invention enables compactness and lightness of the optical view finder system because it is of the rear focus type, as compared to those of the existing front focus type. In particular, the rear focus type zoom lens makes it possible to view a clear image even at a bright place because light adjusted in amount by the iris is incident on the viewer's eye.

Although the preferred embodiments of the invention have been disclosed for illustrative purposes, those skilled in the art will appreciate that various modifications, additions and substitutions are possible, without departing from the scope and spirit of the invention as disclosed in the accompanying claims.

## Claims

1. A rear focus type zoom lens comprising four sections respectively constituted by an objective lens, a magnification varying lens, a transmission lens and an image focusing lens arranged in this order such that the objective lens is disposed at the frontmost position, the zoom lens further comprising:
a beam splitter disposed between a rearmost lens component of the image focusing lens and an image focusing surface and adapted to separate a part of light incident thereon, whereby an optical view finder is integral with the zoom lens.

2. A rear focus type zoom lens in accordance with claim 1, further comprising:
an optical element disposed on an optical path constituting a system of the view finder and adapted to inhibit a divergence of an image;
image correcting means adapted to enable a viewer to view an image having the same form as an object with the naked eye;
visual field correcting means adapted to transmit limitedly only an image photographed on a light receiving element; and
image enlarging means.

3. A rear focus type zoom lens in accordance with claim 1, further comprising a total reflection mirror disposed in the interior of the beam splitter and adapted to make the beam splitter have same or similar reflection and transmission characteristics for various wavelengths in an effective wavelength band.

4. A rear focus type zoom lens comprising four sections respectively constituted by an objective lens, a magnification varying lens, a transmission lens and an image focusing lens arranged in this order such that the objective lens is disposed at the frontmost position, the zoom lens further comprising:
a beam splitter disposed between a rearmost lens component of the image focusing lens and a field lens and adapted to separate a part of light incident thereon, whereby an optical view finder is integral with the zoom lens.

5. A rear focus type zoom lens in accordance with claim 4, further comprising:
an optical element disposed on an optical path constituting a system of the view finder and adapted to inhibit a divergence of an image;
image correcting means adapted to enable a viewer to view an image having the same form as an object with the naked eye;
visual field correcting means adapted to transmit limitedly only an image photographed on a light receiving element; and
image enlarging means.

6. A rear focus type zoom lens in accordance with claim 4, further comprising a total reflection mirror disposed in the interior of the beam splitter and adapted to make the beam splitter have same or similar reflection and transmission characteristics for various wavelengths in an effective wavelength band.

7. A rear focus type zoom lens in accordance with claim 4, wherein the view finder system comprises:
an image focusing surface disposed on one of two splitted optical paths from the beam splitter, along which a parallel light reflected at a normal angle travels in perpendicular to an optical axis of the zoom lens; and
the field lens, a transmission lens and an eyepiece disposed in this order on the other splitted optical path from the beam splitter.
